# EUROPEAN PATENT SPECIFICATION

(11) **EP 3 618 035 B1**
(45) Date of publication and mention of the grant of the patent: **24.01.2024**
(21) Application number: 19190964.7
(22) Date of filing: 09.08.2019
(51) Int. Cl.: G08G 1/16, G08G 1/04, G01S 17/86, G01S 13/86, G06T 17/00, G01S 13/91, G08G 1/08, G01S 17/88

(54) **INTELLIGENT ROADSIDE UNIT, CONTROL METHOD AND STORAGE MEDIUM**
INTELLIGENTE STRASSENSEITIGE EINHEIT, STEUERUNGSVERFAHREN UND SPEICHERMEDIUM
UNITÉ DE BORD DE ROUTE INTELLIGENTE, PROCÉDÉ DE COMMANDE ET SUPPORT D'ENREGISTREMENT

(30) Priority: 31.08.2018 CN 201811014577
(43) Date of publication of application: 04.03.2020
(73) Proprietor: Apollo Intelligent Driving Technology (Beijing) Co., Ltd., Haidian District Beijing 100085 (CN)
(72) Inventor: CAO, Huo, Beijing, 100085 (CN); HU, Xing, Beijing, 100085 (CN); TAO, Sheng, Beijing, 100085 (CN); WANG, Haisong, Beijing, 100085 (CN)
(74) Representative: Manna, Sara

(56) References cited:
- JP-A- 2000 172 979
- JP-A- 2004 280 593
- US-A- 5 111 210
- US-A1- 2016 125 713
- US-A1- 2016 179 093
- US-A1- 2017 372 602
- US-B1- 7 012 637
- US-B1- 9 489 841

## Description

### FIELD

The present disclosure relates to a technical field of transportation, and more particularly, to an intelligent roadside unit and a control method.

### BACKGROUND

An intelligent roadside unit is an important support for autonomous driving. As requirements on intelligence level of the intelligent roadside unit increases, requirements on the sensing capability of the intelligent roadside unit is becoming higher and higher, so that various sensing detectors need to be disposed on the intelligent roadside unit to improve the active sensing ability of the intelligent roadside unit.

However, as types and the number of sensors increase, costs and the amount of data computation of the intelligent roadside unit increase.

US2016125713A1 discloses a surveillance apparatus, a corresponding method, surveillance radar apparatus, computer program, and non-transitory computer-readable recording medium, the surveillance apparatus including an optical camera that captures images based on received light, the optical camera having a first field of view, a radar sensor that emits and receives electromagnetic radiation, the radar sensor having a second field of view, and wherein the first field of view is variable with respect to the second field of view.

US7012637B1 discloses that a multi-camera capture system is aligned using a capture system so that a subject remains in the field of view of a camera. In one embodiment of the present invention, the multi-camera system capture system is mounted on a camera platform. The camera platform is connected to a subject platform and the subject platform is constrained to remain in the field of view of a first camera of the multi-camera capture system. In another embodiment of the present invention, the multi-camera capture system is mounted on a camera platform that moves along a circular track system. The camera platform is configurable to align a first camera to capture a subject within the circular track system as the camera platform moves along the circular track system.

US2017372602 (CONTINENTAL ADVANCED LIDAR SOLUTIONS US LLC), published 28-12-20217, discloses a traffic monitoring and control system having improved performance through the use of short range and/or long range ladar sensors and cameras. A traffic sensor controller controls both video cameras and ladar sensors, receives 2D and 3D image data from same, integrates this data, identifies objects, tracks any identified objects, and passes this information to a local traffic controller. The local traffic controller controls the various traffic signals. In emergency situations, and also when appropriate under normal conditions, local traffic controller may issue warnings and control commands directly to a vehicle which has a cooperating duplex radio link

### SUMMARY

The present disclosure proposes an intelligent roadside unit, a control method and a non-transitory computer readable storage medium, so as to solve problems of high costs and large amount of data computation of the intelligent roadside unit in the related art.

The invention is defined in the appended claims.

Additional aspects and advantages of the present disclosure will be given in the following description, some of which will become apparent from the following description or be learned from practices of the present disclosure.

### BRIEF DESCRIPTION OF THE DRAWINGS

The foregoing and/or additional aspects and advantages of the present disclosure become obvious and easily understood in descriptions of the embodiments with reference to the following accompanying drawings.
Fig. 1 is a schematic diagram of an intelligent roadside unit provided by an embodiment of the present disclosure.
Fig. 2 is a schematic diagram of an intelligent roadside unit provided by another embodiment of the present disclosure.
Fig. 3 is a flowchart of a control method provided by an embodiment of the present disclosure.
Fig. 4 is a flowchart of a control method provided by another embodiment of the present disclosure.

### DETAILED DESCRIPTION

Embodiments of the present disclosure are described below in detail, examples of the embodiments are shown in accompanying drawings, and reference signs that are the same or similar from beginning to end represent the same or similar components or components that have the same or similar functions.

Hereinafter, intelligent roadside units and control methods according to embodiments of the present disclosure are described with reference to the drawings.

In practical applications, for roads with a small traffic volume, disposing a camera in each direction of the intelligent roadside unit not only increases costs, but also greatly increases the amount of data computation. With respect to problems of high costs and large amount of data computation of the intelligent roadside unit in the related art, embodiments of the present disclosure propose an intelligent roadside unit.

By setting the circular track and disposing the camera on the circular track, the intelligent roadside unit according to embodiments of the present disclosure may control the camera to move to the approach direction of the vehicle for shooting, thereby reducing costs and the amount of data computation as there is no need to arrange a camera in each direction. Furthermore, the intelligent roadside unit adopts the circular radar array, so that the measurement accuracy can be guaranteed.

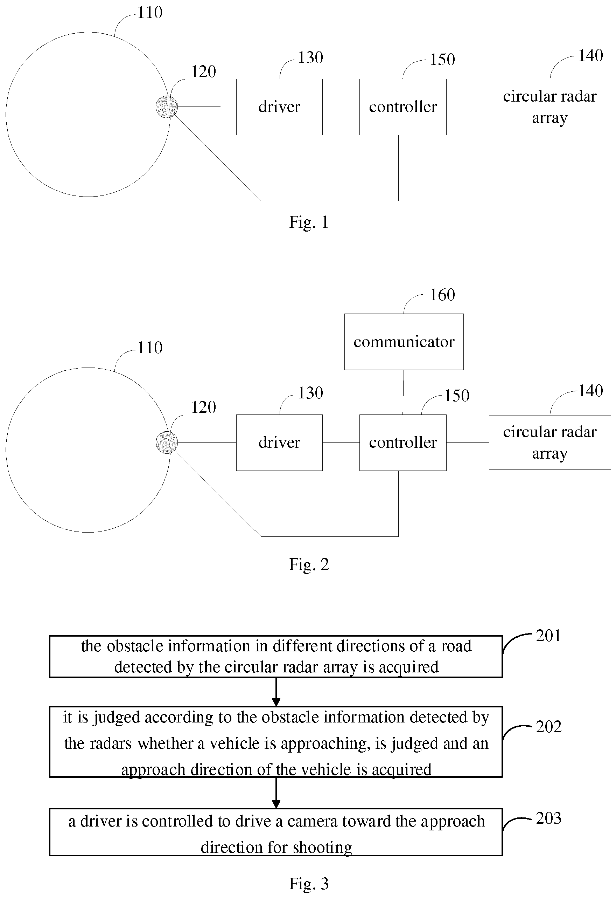

Fig. 1 is a schematic diagram of an intelligent roadside unit provided by an embodiment of the present disclosure.

As illustrated in Fig. 1, the intelligent roadside unit includes: a circular track 110, a camera 120, a driver 130, a circular radar array 140 and a controller 150.

The camera 120 is disposed on the circular track 110 and movable along the circular track 110. The driver 130 is coupled to the camera 120, and may drive the camera 120 to move along the circular track 110. The circular radar array 140 includes a plurality of radars detecting obstacle information in different directions of a road respectively.

The obstacle information may include information such as a distance and an orientation between an obstacle and the intelligent roadside unit. The number of radars may be arranged according to practical requirements.

In practical implementations, a millimeter-wave radar may be adopted, and a plurality of millimeter-wave radars form a circular millimeter-wave radar array. Since a laser radar has advantages such as a high accuracy and an anti-interference ability, a laser radar may be adopted as well, such that a plurality of laser radars form a circular laser radar array.

The camera 120 may be coupled to the controller 150, such that the controller 150 may acquire images captured by the camera 120.

The controller 150 may judge whether there is a vehicle approaching and acquire an approach direction of the vehicle according to the obstacle information detected by the radars, and control the driver 130 to drive the camera 120 to move to the approach direction for shooting.

In this embodiment, the camera 120 is disposed on the circular track 110. The controller 150 judges whether there is a vehicle approaching according to the obstacle information of different directions of a road detected by the plurality of radars in the circular radar array. Specifically, the controller 150 may acquire information such as a distance between an obstacle and the radars and orientations of the obstacle which are detected by the radars in a preset time interval, and then judges whether there is a vehicle approaching. When the obstacle detected by the radars gradually approaches the intelligent roadside unit, the controller 150 judges that the vehicle being approaching is detected and acquires an approach direction of the vehicle. And then, the driver 130 is controlled to drive the camera 120 to move to the approach direction of the vehicle for shooting.

For example, the radars detect an obstacle moving from the east to the west in an east-west road, and detect that a distance between the obstacle and the radars is changing from 60 meters to 50 meters, and to 40 meters, and then the controller 150 may judge that a vehicle is gradually approaching from the east to the west according to obstacle information detected by the radars, such that the camera 120 is controlled to move on due east to shoot the vehicle.

In practical applications, for roads with a small traffic volume, disposing a camera in each direction not only increases the costs, but also greatly increases the amount of computation. For roads with a small traffic, in this embodiment, the approach direction of the vehicle may be detected by the circular radar array firstly, and then the camera may be drove to move on the circular track to acquire an image from the approach direction, thereby lowering the costs and effectively reducing the amount of computation of the intelligent roadside unit for roads with a small traffic volume.

In this embodiment, by disposing the camera on the circular track, in which the camera is movable on the circular track, the camera may be moved to different directions for shooting. That is, only one camera needs to be provided to implement shooting in each direction. Consequently, there is no need to arrange a plurality of cameras in different directions, thereby greatly reducing the costs. In addition, when it is detected that a vehicle is approaching, the camera is controlled to move to an approach direction of the vehicle for shooting, thereby greatly reducing the amount of data computation. Furthermore, arranging the circular radar array may guarantee the accuracy of measurement.

In practical applications, the camera may be interfered by a radar signal. To improve the imaging resolution, in this embodiment, the intelligent roadside unit further includes: a shielding layer wrapping at least a part of the camera. For example, the camera 120, except the lens, is wrapped by the shielding material.

Since the shielding layer may affect heat dissipation, in actual uses, the shielding layer may wrap the camera 120 except the lens and the heat dissipation portion. Consequently, the imaging resolution is improved without affecting the operation and heat dissipation of the camera.

Therefore, wrapping the camera with the shielding layer may eliminate the interference caused by components such as radars on the camera, thereby improving the imaging resolution of the camera.

Furthermore, the controller 150 may further generate a point cloud image according to the image captured by the camera 120 and the obstacle information detected by the radars. The point cloud image refers to an image generated by a set of point data on the surface of an object.

Since the radars may detect the distance between an obstacle and the intelligent roadside unit, the controller 150 may acquire the distance between each point on the obstacle and the intelligent roadside unit at the same time, and generate a point cloud image in combination with the image captured by the camera 120.

Since the intelligent roadside unit is an important support for automatic driving, the intelligent roadside unit may send the point cloud image to an automatic car or a server close to the intelligent roadside unit. Fig. 2 is a schematic diagram of an intelligent roadside unit provided by the embodiment of the present disclosure.

As illustrated in Fig. 2, the intelligent roadside unit further includes: a communicator 160.

The communicator 160 is coupled to the controller 150, and the controller 150 may send the point cloud map to the automatic car or the server close to the intelligent roadside unit via the communicator 160. The communicator 160 may be an antenna, and the controller 150 sends the point cloud map to the automatic car or the server close to the intelligent roadside unit via the antenna.

In this embodiment, the controller sends the point cloud image to the automatic car close to the intelligent roadside unit, such that the automatic car adopts a corresponding control strategy according to the point cloud image. Alternatively, the controller uploads the point cloud image to the server, which performs a big data analysis according to the point cloud image, or generates a control instruction according to the point cloud image and sends the control instruction to the nearby automatic car. Consequently, the security and reliability of the automatic car are enhanced.

In actual uses, to reduce the stopping time of the vehicle at a red light (stoplight), the intelligent roadside unit further includes: traffic lights.

The controller 150 may control the traffic lights according to the point cloud image. Specifically, the intelligent roadside unit may be arranged at the center of an intersection. When the controller 150 judges that there are many vehicles on a certain road and rather less vehicles on a road on the other side of the intersection according to the point cloud image, for the road with many vehicles, the stopping time at the red light may be shorten and the passing time at the green light may be prolonged, thereby reducing the waiting time for the vehicles.

In this embodiment, the controller may control the traffic lights according to the point cloud image, thereby controlling traffic lights according to an actual traffic volume and reducing waiting time of vehicles.

To implement the above embodiment, embodiments of the present disclosure further propose a control method. The control method may be implemented by the intelligent roadside unit provided by embodiments of the present disclosure.

Fig. 3 is a flowchart of a control method provided by an embodiment of the present disclosure. As illustrated in Fig. 3, the control method includes the followings.

At block 201, the obstacle information in different directions of a road detected by the circular radar array is acquired.

The circular radar array includes a plurality of radars detecting the obstacle information in different directions of a road respectively. The obstacle information may include information such as a distance between an obstacle and the intelligent roadside unit and an orientation of the obstacle. The number of radars may be arranged according to practical requirements.

In practical implementations, a millimeter-wave radar may be adopted, and a plurality of millimeter-wave radars form a circular millimeter-wave radar array. Since a laser radar has advantages such as a high accuracy and an anti-interference ability, a laser radar may be adopted as well, such that a plurality of laser radars form the circular laser radar array.

In this embodiment, adopting the circular radar array to detect the obstacle information in different directions of a road may guarantee the measurement accuracy.

At block 202, it is judged according to the obstacle information detected by the radars whether a vehicle is approaching, and an approach direction of the vehicle is acquired.

The intelligent roadside unit may judge whether there is a car approaching according to the obstacle information of different road directions detected by the plurality of radars in the circular radar array. Specifically, the intelligent roadside unit may acquire information such as a distance and an orientation between an obstacle and the radars detected by the radars in a preset time interval, and then judges whether there is a vehicle approaching. When the obstacle detected by the radars gradually approaches the intelligent roadside unit, it is judged that the vehicle being approaching is detected, and an approach direction of the vehicle is acquired.

For example, the radars detect an obstacle moving from the east to the west in an east-west road, and detect that a distance between the obstacle and the radars changes from 60 meters to 50 meters, and to 40 meters, and then the intelligent roadside unit may judge that a vehicle is gradually approaching from the east to the west according to obstacle information detected by the radars.

At block 203, a driver is controlled to drive a camera toward the approach direction for shooting.

In this embodiment, the camera is disposed on the circular track and movable along the circular track.

After the approach direction of a vehicle is determined, the intelligent roadside unit may control the driver (actuator) to drive the camera toward the approach direction of the vehicle on the circular track, thereby enabling the lens of the camera to be aligned with the driving direction of the vehicle so as to perform the shooting.

In practical applications, for roads with a small traffic volume, disposing a camera in each direction not only increases the costs, but also greatly increases the amount of computation. For roads with a small traffic, in this embodiment, the approach direction of the vehicle may be detected by the circular radar array firstly, and then the camera may be drove to move on the circular track to acquire an image from the approach direction, thereby lowering the costs and effectively reducing the amount of computation of the intelligent roadside unit for roads with a small traffic volume.

In this embodiment, by disposing on the circular track the camera that is movable on the circular track, the camera may be moved to different directions for shooting. That is, only one camera needs to be provided to implement shooting in each direction. Consequently, there is no need to arrange a plurality of cameras in different directions, thereby greatly reducing the costs. In addition, when it is detected that a vehicle is approaching, the camera is controlled to move to an approach direction of the vehicle for shooting, thereby greatly reducing the amount of data computation. Furthermore, detecting the obstacle information of different directions of a road through the circular radar array may guarantee the measurement accuracy.

In practical applications, the camera may be interfered by radars. To improve the imaging resolution, in this embodiment, the shielding layer may wrap at least a part of the camera. For example, the camera, except the lens, is wrapped by the shielding material.

Since the shielding layer may affect heat dissipation, in actual uses, the shielding layer may wrap the camera except for the lens and the heat dissipation portion. Consequently, the imaging resolution is improved without affecting the operation and heat dissipation of the camera.

Therefore, wrapping the camera with the shielding layer may eliminate the interference caused by components such as radars and the antenna on the camera, thereby improving the imaging resolution of the camera.

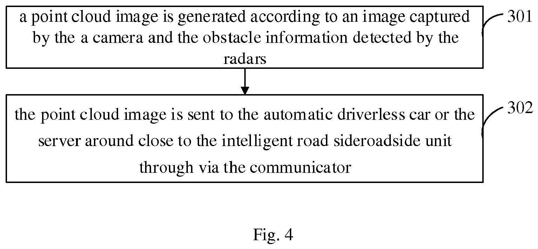

Furthermore, the intelligent roadside unit may further generate a point cloud image according to the image captured by the camera and the obstacle information detected by the radars, and send the point cloud image to the automatic car or the server. The point cloud image refers to an image generated by a set of point data on the surface of an object. Fig. 4 is a flowchart of a control method provided by the embodiment of the present disclosure.

As illustrated in Fig. 4, the control method further includes the followings.

At block 301, a point cloud image is generated according to an image captured by a camera and obstacle information detected by radars.

Since the radars may detect the distance between an obstacle and the intelligent roadside unit, the intelligent roadside unit may acquire the distance between each point on the obstacle and the intelligent roadside unit at the same time, and generate a point cloud image in combination with the image captured by the camera.

At block 302, the point cloud image is sent to the automatic car or the server close to the intelligent roadside unit via the communicator.

Since the intelligent roadside unit is an important support for automatic driving, the intelligent roadside unit may send the point cloud image to the automatic car or a server close to the intelligent roadside unit.

The intelligent roadside unit may send the point cloud image to the automatic car or the server around the intelligent roadside unit via the communicator. The communicator may be an antenna, and the intelligent roadside unit sends the point cloud map to the automatic car or the server close to the intelligent roadside unit via the antenna.

In this embodiment, the intelligent roadside unit sends the point cloud image to the automatic car close to the intelligent roadside unit, such that the automatic car adopts a corresponding control strategy according to the point cloud image. Alternatively, the intelligent roadside unit uploads the point cloud image to the server, and the server performs a big data analysis according to the point cloud image, or the server generates a control instruction according to the point cloud image and sends the control instruction to the nearby automatic car. Consequently, the security and reliability of the automatic car are enhanced.

In actual uses, to reduce the time for vehicles to wait at a red light, in this embodiment, the intelligent roadside unit may further control the traffic lights according to the point cloud image.

Specifically, the intelligent roadside unit may be arranged at the center of an intersection. When the intelligent roadside unit judges that there are many vehicles on a certain road and rather less vehicles on a road on the other side of the intersection according to the point cloud image, for the road with many vehicles, the stopping time at the red light may be shorten and the passing time at the green light may be prolonged, thereby reducing the waiting time for the vehicles.

In this embodiment, the controller may control the traffic lights according to the point cloud image, thereby controlling traffic lights according to an actual traffic volume and reducing waiting time of vehicles.

To implement the above embodiment, embodiments of the present disclosure further propose an intelligent roadside unit including a processor and a memory.

The processor runs a program corresponding to executable program codes by reading the executable program codes stored in the memory for implementing the control method according to the above embodiments.

To implement the above embodiment, embodiments of the present disclosure further propose a non-transitory computer readable storage medium having a computer program stored thereon, wherein the program implements the control method according to the above embodiments when executed by a processor.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the functions may not be performed in sequences, including a sequence that related functions are performed in a substantially simultaneous or a reverse manner, illustrated or discussed herein, which should be understood by persons of ordinary skill in the art.

The logic and/or step described in other manners herein or shown in the flow chart, for example, a particular sequence table of executable instructions for implementing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

Persons of ordinary skill in the art shall understand that all or parts of the steps in the above exemplifying method of the present disclosure may be achieved by commanding the related hardware with programs. The programs may be stored in a computer readable storage medium, and the programs include one or a combination of the steps in the method embodiments of the present disclosure when run on a computer.

The storage medium mentioned above may be read-only memories, magnetic disks or CD, etc.

## Claims

1. An intelligent roadside unit, comprising:
a circular track (110);
a camera (120) disposed on the circular track and movable along the circular track;
a driver (130) for driving the camera (120);
a circular radar array (140), wherein the circular radar array (140) comprises a plurality of radars detecting obstacle information in different directions of a road respectively, and the obstacle information comprises a distance between an obstacle and the intelligent roadside unit and a moving orientation of the obstacle; and
a controller (150) configured to judge whether there is a vehicle approaching and to acquire an approach direction of the vehicle according to the obstacle information detected by the plurality of radars, and to control the driver (130) to drive the camera (120) toward the approach direction for shooting,
wherein the controller (150) acquires distances between points on the obstacle and the intelligent roadside unit at the same time, and generates a point cloud image according to an image captured by the camera (120) and the obstacle information detected by the radars;
the controller (150) is configured to send the point cloud image to an automatic car close to the intelligent roadside unit through a communicator (160) coupled to the controller (150), to allow an automatic car adopting a corresponding control strategy according to the point cloud image.

2. The intelligent roadside unit according to claim 1, wherein the plurality of radars of the circular radar array are millimeter-wave radars or laser radars.

3. The intelligent roadside unit according to claim 1 or 2, wherein when an obstacle detected by the radars approaches the intelligent roadside unit, the controller (150) judges that the vehicle being approaching is detected.

4. The intelligent roadside unit according to any of claims 1 to 3, further comprising:
a shielding layer wrapping at least a part of the camera (120).

5. The intelligent roadside unit according to claim 1, further comprising:
traffic lights, the controller (150) being configured to control the traffic lights arranged at an intersection to shorten a stopping time at red light and to prolong a passing time at green light when the controller (150) determines that there are many vehicles on a certain road and rather less vehicles on a road on the other side of the intersection according to the point cloud image.

6. A control method applied to an intelligent roadside unit, comprising:
acquiring (201) obstacle information in different directions of a road detected by a circular radar array, wherein the circular radar array comprises a plurality of radars detecting obstacle information in different directions of a road respectively, and the obstacle information comprises a distance between an obstacle and the intelligent roadside unit and a moving orientation of the obstacle;
judging (202) whether there is a vehicle approaching and acquiring an approach direction of the vehicle according to the obstacle information detected by the radars, and
controlling (203) a driver to drive a camera toward the approach direction for shooting, wherein the camera is disposed on a circular track and movable along the circular track,
wherein the method further comprises acquiring distances between points on the obstacle and the intelligent roadside unit at the same time, and generating a point cloud image according to an image captured by the camera (120) and the obstacle information detected by the radars;
sending the point cloud image to an automatic car close to the intelligent roadside unit, to allow an automatic car adopting a corresponding control strategy according to the point cloud image.

7. The control method according to claim 6, wherein the plurality of radars of the circular radar array are millimeter-wave radars or laser radars.

8. The control method according to claim 6 or 7, further comprising:
when an obstacle detected by the radars approaches the intelligent roadside unit, judging that the vehicle being approaching is detected.

9. The control method according to any of claims 6 to 8, wherein at least a part of the camera is wrapped by a shielding layer.

10. The control method according to claim 6, further comprising:
controlling traffic lights arranged at an intersection to shorten a stopping time at red light and to prolong a passing time at green light when it is determined that there are many vehicles on a certain road and rather less vehicles on a road on the other side of the intersection according to the point cloud image.

11. A non-transitory computer readable storage medium having a computer program stored thereon, wherein the program implements the control method according to any one of claims 6 to 10 when executed by a processor.

## Patentansprüche

1. Eine intelligente Roadside-Einheit umfassend:
eine kreisförmige Führungsbahn (110);
eine Kamera (120), die auf der kreisförmigen Führungsbahn angeordnet und entlang der kreisförmigen Führungsbahn bewegbar ist;
einen Antrieb (130) zum Antreiben der Kamera (120);
ein kreisförmiges Radararray (140), wobei das kreisförmige Radararray (140) eine Vielzahl von Radaren umfasst, die jeweils Hindernisinformationen in verschiedenen Richtungen einer Straße erfassen, und wobei die Hindernisinformationen einen Abstand zwischen einem Hindernis und der intelligenten Roadside-Einheit und eine Bewegungsausrichtung des Hindernisses umfassen; und
einen Controller (150), der eingerichtet ist, zum Beurteilen, ob sich ein Fahrzeug nähert, und zum Erlangen einer Annäherungsrichtung des Fahrzeugs gemäß der von der Vielzahl von Radaren erfassten Hindernisinformationen, und zum Steuern des Antriebs (130), um die Kamera (120) zum Fotografieren in Richtung der Annäherungsrichtung zu fahren,
wobei der Controller (150) gleichzeitig Abstände zwischen Punkten auf dem Hindernis und der intelligenten Roadside-Einheit erlangt und ein Punktwolkenbild gemäß einem von der Kamera (120) aufgenommenen Bild und den von den Radaren erfassten Hindernisinformationen erzeugt;
wobei der Controller (150) eingerichtet ist, um das Punktwolkenbild über einen mit dem Controller (150) gekoppelten Kommunikator (160) an ein automatisches Fahrzeug in der Nähe der intelligenten Roadside-Einheit zu senden, um es einem automatischen Fahrzeug zu ermöglichen, eine korrespondierende Steuerstrategie gemäß dem Punktwolkenbild anzuwenden.

2. Intelligente Roadside-Einheit gemäß Anspruch 1, wobei die Vielzahl von Radaren des kreisförmigen Radararrays Millimeterwellenradare oder Laserradare sind.

3. Intelligente Roadside-Einheit gemäß Anspruch 1 oder 2, wobei der Controller (150) beurteilt, dass das sich nähernde Fahrzeug erkannt wird, wenn sich ein von den Radaren erfasstes Hindernis der intelligenten Roadside-Einheit nähert.

4. Intelligente Roadside-Einheit gemäß einem der Ansprüche 1 bis 3 ferner umfassend:
eine Abschirmungsschicht, die mindestens einen Teil der Kamera (120) umhüllt.

5. Intelligente Roadside-Einheit gemäß Anspruch 1, ferner umfassend:
Verkehrsampeln, wobei der Controller (150) dazu eingerichtet ist, die an einer Kreuzung angeordneten Verkehrsampeln zu steuern, um eine Haltezeit bei rotem Licht zu verkürzen und eine Durchfahrtzeit bei grünem Licht zu verlängern, wenn der Controller (150) gemäß dem Punktwolkenbild feststellt, dass viele Fahrzeuge auf einer bestimmten Straße und eher weniger Fahrzeuge auf einer Straße auf der anderen Seite der Kreuzung sind.

6. Steuerungsverfahren für eine intelligente Roadside-Einheit umfassend:
Erlangen (201) von Hindernisinformationen in verschiedenen Richtungen einer Straße, die von einem kreisförmigen Radararray erfasst werden, wobei das kreisförmige Radararray eine Vielzahl von Radaren umfasst, die jeweils Hindernisinformationen in verschiedenen Richtungen einer Straße erfassen, und die Hindernisinformationen einen Abstand zwischen einem Hindernis und der intelligenten Roadside-Einheit und eine Bewegungsausrichtung des Hindernisses umfassen;
Beurteilen (202), ob sich ein Fahrzeug nähert, und Erlangen einer Annäherungsrichtung des Fahrzeugs gemäß den von den Radaren erfassten Hindernisinformationen, und
Steuern (203) eines Antriebs, um eine Kamera zum Fotografieren in die Annäherungsrichtung zu fahren, wobei die Kamera auf einer kreisförmigen Führungsbahn angeordnet und entlang der kreisförmigen Führungsbahn bewegbar ist,
wobei das Verfahren ferner das gleichzeitige Erlangen von Abständen zwischen Punkten auf dem Hindernis und der intelligenten Roadside-Einheit und das Erzeugen eines Punktwolkenbildes gemäß einem von der Kamera (120) aufgenommenen Bild und der von den Radaren erfassten Hindernisinformationen umfasst;
Senden des Punktwolkenbildes an ein automatisches Fahrzeug in der Nähe der intelligenten Roadside-Einheit, um es einem automatischen Fahrzeug zu ermöglichen, eine korrespondierende Steuerstrategie gemäß dem Punktwolkenbild anzuwenden.

7. Steuerungsverfahren gemäß Anspruch 6, wobei die Vielzahl der Radargeräte des kreisförmigen Radararrays Millimeterwellenradare oder Laserradare sind.

8. Steuerungsverfahren gemäß Anspruch 6 oder 7, ferner umfassend:
wenn sich ein von den Radaren erfasstes Hindernis der intelligenten Roadside-Einheit nähert, Beurteilen, dass das sich nähernde Fahrzeug erfasst ist.

9. Steuerungsverfahren gemäß einem der Ansprüche 6 bis 8, wobei zumindest ein Teil der Kamera von einer Abschirmungsschicht umhüllt ist.

10. Steuerungsverfahren gemäß Anspruch 6, ferner umfassend:
Steuern von Ampeln, die an einer Kreuzung angeordnet sind, um eine Haltezeit bei rotem Licht zu verkürzen und eine Durchfahrtzeit bei grünem Licht zu verlängern, wenn gemäß dem Punktwolkenbild festgestellt wird, dass sich viele Fahrzeuge auf einer bestimmten Straße und eher weniger Fahrzeuge auf einer Straße auf der anderen Seite der Kreuzung befinden.

11. Nicht-flüchtiges computerlesbares Speichermedium, auf dem ein Computerprogramm gespeichert ist, wobei das Programm das Steuerungsverfahren gemäß einem der Ansprüche 6 bis 10 implementiert, wenn es von einem Prozessor ausgeführt wird.

## Revendications

1. Unité de bord de route, comprenant :
une piste circulaire (110) ;
une caméra (120) disposée sur la piste circulaire et mobile le long de la piste circulaire ;
un pilote (130) pour entraîner la caméra (120) ;
un réseau de radars en cercle (140), dans laquelle le réseau de radars en cercle (140) comprend une pluralité de radars détectant respectivement des informations d'obstacles dans différentes directions d'une route, et les informations d'obstacles comprennent une distance entre un obstacle et l'unité de bord de route et une orientation de déplacement de l'obstacle ; et
un dispositif de commande (150) configuré pour juger si un véhicule est à l'approche et pour acquérir une direction d'approche du véhicule selon les informations d'obstacles détectées par la pluralité de radars, et pour commander le pilote (130) pour qu'il entraîne la caméra (120) vers le direction d'approche pour une prise de vue,
dans laquelle le dispositif de commande (150) acquiert les distances entre des points sur l'obstacle et l'unité de bord de route en même temps, et génère une image de nuage de points selon une image capturée par la caméra (120) et les informations d'obstacles détectées par les radars ;
le dispositif de commande (150) est configuré pour envoyer l'image de nuage de points à une voiture automatique proche de l'unité de bord de route par l'intermédiaire d'un appareil de communication (160) couplé au dispositif de commande (150), afin de permettre à une voiture automatique d'adopter une stratégie de commande correspondante selon l'image de nuage de points.

2. Unité de bord de route selon la revendication 1, dans laquelle la pluralité de radars du réseau de radars en cercle sont des radars à ondes millimétriques ou des radars laser.

3. Unité de bord de route selon la revendication 1 ou 2, dans laquelle lorsqu'un obstacle détecté par les radars s'approche de l'unité de bord de route, le dispositif de commande (150) juge que le véhicule à l'approche est détecté.

4. Unité de bord de route selon l'une des revendications 1 à 3, comprenant en outre :
une couche de protection enveloppant au moins une partie de la caméra (120).

5. Unité de bord de route selon la revendication 1, comprenant en outre :
des feux de circulation, le dispositif de commande (150) étant configuré pour commander les feux de circulation prévus au niveau d'une intersection pour raccourcir un temps d'arrêt au feu rouge et pour prolonger un temps de passage au feu vert lorsque le dispositif de commande (150) détermine qu'il y a beaucoup de véhicules sur une certaine route et plutôt moins de véhicules sur une route de l'autre côté de l'intersection selon l'image de nuage de points.

6. Procédé de commande appliqué à une unité de bord de route, comprenant les étapes suivantes :
acquérir (201) des informations d'obstacles dans différentes directions d'une route détectée par un réseau de radars en cercle, dans lequel le réseau de radars en cercle comprend une pluralité de radars détectant respectivement des informations d'obstacles dans différentes directions d'une route, et les informations d'obstacles comprend une distance entre un obstacle et l'unité de bord de route et une orientation de déplacement de l'obstacle ;
juger (202) si un véhicule est à l'approche et acquérir une direction d'approche du véhicule selon les informations d'obstacles détectées par les radars, et
commander (203) un pilote pour qu'il entraîne une caméra vers la direction d'approche pour une prise de vue,
dans lequel la caméra est disposée sur une piste circulaire et est mobile le long de la piste circulaire,
dans lequel le procédé comprend en outre l'acquisition de distances entre des points sur l'obstacle et l'unité de bord de route en même temps, et la génération d'une image de nuage de points selon une image capturée par la caméra (120) et les informations d'obstacles détectées par les radars ;
envoyer l'image de nuage de points à une voiture automatique proche de l'unité de bord de route, afin de permettre à une voiture automatique d'adopter une stratégie de commande correspondante selon l'image de nuage de points.

7. Procédé de commande selon la revendication 6, dans lequel la pluralité de radars du réseau de radars en cercle sont des radars à ondes millimétriques ou des radars laser.

8. Procédé de commande selon la revendication 6 ou 7, comprenant en outre l'étape suivante :
lorsqu'un obstacle détecté par les radars s'approche de l'unité de bord de route, juger que le véhicule à l'approche est détecté.

9. Procédé de commande selon l'une des revendications 6 à 8, dans lequel au moins une partie de la caméra est enveloppée d'une couche de protection.

10. Procédé de commande selon la revendication 6, comprenant en outre l'étape suivante :
commander des feux de circulation prévus au niveau d'une intersection pour raccourcir un temps d'arrêt au feu rouge et pour prolonger un temps de passage au feu vert lorsqu'il est déterminé qu'il y a beaucoup de véhicules sur une certaine route et plutôt moins de véhicules sur une route de l'autre côté de l'intersection selon l'image de nuage de points.

11. Support de stockage non transitoire lisible par ordinateur sur lequel est stocké un programme informatique, dans lequel le programme met en oeuvre le procédé de commande selon l'une quelconque des revendications 6 à 10 lorsqu'il est exécuté par un processeur.
